Europäisches Patentamt

**(19)** European Patent Office

Office européen des brevets

**(11)** **EP 1 728 883 A1**

**(12)** **EUROPEAN PATENT APPLICATION**
published in accordance with Art. 158(3) EPC

**(43)** Date of publication:
**06.12.2006 Bulletin 2006/49**

**(51)** Int Cl.:
*C22C 38/00* (2006.01)     *C22C 38/06* (2006.01)
*C22C 38/58* (2006.01)     *F16B 35/00* (2006.01)
*C21D 9/00* (2006.01)

**(21)** Application number: **05719710.5**

**(22)** Date of filing: **01.03.2005**

**(86)** International application number:
**PCT/JP2005/003393**

**(87)** International publication number:
**WO 2005/083141 (09.09.2005 Gazette 2005/36)**

**(84)** Designated Contracting States:
**DE GB**

**(30)** Priority: **02.03.2004 JP 2004057379**

**(71)** Applicants:
 • **HONDA MOTOR CO., Ltd.**
 **Tokyo 107-8556 (JP)**
 • **Saga Tekkohsho Co., Ltd**
 **Saga-shi,**
 **Saga 840-0806 (JP)**
 • **Kabushiki Kaisha Kobe Seiko Sho (Kobe Steel, Ltd.)**
 **Kobe-shi,**
 **Hyogo 651-8585 (JP)**

**(72)** Inventors:
 • **TAKASHIMA, Mitsuo**
 **c/o K.K. Honda Gijutsu Kenkyusho**
 **Wako-shi,**
 **Saitama 3510193 (JP)**
 • **TAKADA, Kentaro,**
 **c/o K.K. Honda Gijutsu Kenkyusho**
 **Wako-shi,**
 **Saitama 3510193 (JP)**
 • **IIDA, Zenji,**
 **c/o K.K. Honda Gijutsu Kenkyusho**
 **Wako-shi,**
 **Saitama 3510193 (JP)**

 • **TSUKIYAMA, Katsuhiro,**
 **c/o Saga Tekkohsho Co., Ltd.**
 **Saga-shi,**
 **Saga 8400806 (JP)**
 • **EGAWA, Takehiko,**
 **c/o Saga Tekkohsho Co., Ltd.**
 **Saga-shi,**
 **Saga 8400806 (JP)**
 • **NAMIMURA, Yuichi,**
 **c/o Kobe Works**
 **Nada-ku,**
 **Kobe-shi,**
 **Hyogo 6570863 (JP)**
 • **IBARAKI, Nobuhiko,**
 **c/o Kobe Works**
 **Nada-ku,**
 **Kobe-shi,**
 **Hyogo 6570863 (JP)**

**(74)** Representative: **Gillard, Richard Edward**
 **Elkington and Fife LLP,**
 **Prospect House**
 **8 Pembroke Road**
 **Sevenoaks,**
 **Kent TN13 1XR (GB)**

**(54)** **HIGH STRENGTH BOLT EXCELLENT IN CHARACTERISTICS OF RESISTANCE TO DELAYED FRACTURE AND RESISTANCE TO RELAXATION**

**(57)**     Disclosed is a high-strength bolt having a tensile strength of 1,200 N/mm$^2$ or more and superior in delayed fracture resistance and relaxation resistance, prepared by wire-drawing a bolt steel containing the following elements: C: 0.5 to 1.0% (mass %, the same shall apply hereinafter), Si: 0.55 to 3%, Mn: 0.2 to 2%, P: 0.03% or less (but not 0%), S: 0.03% or less (but not 0%), and Al: 0.3% or less (but not 0%), and containing proeutectoid ferrite, proeutectoid cementite, bainite and martensite at a total areal rate of less than 20% and pearlite in balance; cold-heading the wire into a bolt shape; and then bluing the bolt in a temperature range of 100 to 500°C.

**(Cont. next page)**

EP 1 728 883 A1

# FIG.4

**Description**

[TECHNICAL FIELD]

The present invention relates to a high-strength bolt mainly for use in automobiles, and in particular to a high-strength bolt having a tensile strength (strength) of 1,200 N/mm$^2$ or more that is superior in delayed fracture resistance and relaxation resistance.

[BACKGROUND ART]

Carbon alloy steels (such as SCM435, SCM440, and SCr440) are used for common high-strength bolts, and these bolts are given a desirable strength by quenching and tempering. However, common high-strength bolts used in automobiles and various industrial machines have a risk of generating delayed fracture when they have a tensile strength in the range above approximately 1,200 N/mm$^2$, and thus, have restriction in use.

The delayed fracture includes both phenomena occurring in corrosive and noncorrosive environments, and the reasons for its occurrence are said to be complicated by various factors, and thus, it is difficult to specify the reasons indiscriminately. The regulatory factors responsible for the delayed fracture include tempering temperature, structure, material hardness, grain size, various alloy elements, and others, but there is currently no effective means to prevent the delayed fracture, and various methods are studied by trial and error even now.

. There are proposed many methods of preventing the delayed fracture (e.g., Patent Documents 1 to 3). In these methods, the delayed fracture of high-strength bolts having a tensile strength of 1,400 N/mm$^2$ or more is reduced by adjusting the contents of various major alloy elements, but the risk of the delayed fracture is not completely eliminated, and the application thereof still remains in extremely limited areas.

Patent Document 4 discloses a method of improving the delayed fracture resistance further. In Patent Document 4, a high-stremgth bolt having a tensile strength of 1,200 N/mm$^2$ or more is produced by preparing a high-strength bolt steel not in a quenched and tempered structure but in a pearlite structure and then by strongly wire-drawing the bolt steel. The pearlite structure introduced in the high-strength bolt has an action to trap hydrogen at the interface between cementite and ferrite and to reduce hydrogen accumulated at the interface, and thus, improves the delayed fracture resistance.

However, the pearlite steel has a problem of its own. That is, tightening bolts used at high temperature occasionally show a phenomenon of deterioration in proof stress ratio and thus in tightening force during use, and such a phenomenon is called relaxation (relaxation of stress). There is a concern about decline in properties for the phenomenon (e.g., in relaxation property), especially when a pearlite steel instead of a quenched and tempered steel is used in production of bolt. Such a phenomenon may lead to elongation of the bolt and possible deterioration in its initial tightening force, and thus, bolts used, for example, around automobile engine should also be superior in relaxation resistance. However, the relaxation property is not considered well in conventional high-strength bolts, except the bolt described in Patent Document 5.

In Patent Document 5, a pearlite steel having a particular composition is wire-drawn strongly and cold-headed into the bolt shape, and the bolt is subject to a bluing treatment in a temperature range of 100 to 400˚C. The bluing prevents plastic deformation by the age hardening with C and N, improves the strength and the proof stress ratio of the bolt, and also prevents thermal settling at a temperature of 100 to 200˚C, and thus, improves the relaxation resistance. Although Patent Document 5 is an invention aimed at improving relaxation resistance, it does not disclose the relationship between Si content and the relaxation resistance and claims that the Si content should be 0.5% or less because an excessive Si content leads to deterioration of the ductility of the steel material after wire-drawing as well as significant deterioration of the cold-heading efficiency.

Patent Document 1: Japanese Unexamined Patent Publication No. 60-114551
Patent Document 2: Japanese Unexamined Patent Publication No. 2-267243
Patent Document 3: Japanese Unexamined Patent Publication No. 3-243745
Patent Document 4: Japanese Unexamined Patent Publication No. 2000-337332
Patent Document 5: Japanese Unexamined Patent Publication No. 2001-348618

[SUMMARY OF THE INVENTION]

An object of the present invention, which was made under the circumstance above, is to establish a method to further increase the relaxation resistance of a high-strength bolt in a pearlite structure having a tensile strength of 1,200 N/mm$^2$ or more that is superior in delayed fracture resistance.

The high-strength bolt according to the invention has a tensile strength of 1,200 N/mm$^2$ or more that is superior in delayed fracture resistance and relaxation resistance, characterized by being prepared by: wire-drawing a bolt steel containing the following elements: C: 0.5 to 1.0% (mass %, the same shall apply hereinafter), Si: 0.55 to 3%, Mn: 0.2 to 2%, P: 0.03% or less (but not 0%), S: 0.03% or less (but not 0%), and Al: 0.3% or less (but not 0%), having at a total areal rate of proeutectoid ferrite, proeutectoid cementite, bainite and martensite of less than 20%, and containing pearlite in balance; cold-heading the wire into a bolt shape; and then bluing the bolt in a temperature range of 100 to 500°C.

BREIF DESCRIPTION OF THE DRAWINGS

Figure 1 includes schematic explanatory views illustrating a stud bolt used in a delayed fracture resistance test.
Figure 2 is a photograph replacing drawing, showing the bainite structure.
Figure 3 is a photograph replacing drawing, showing the proeutectoid cementite structure.
Figure 4 is a graph showing the relationship among the Si content, presence or absence of bluing, and the relaxation value.

DESCRIPTION OF THE PREFERRED EMBODIMENTS

After intensive studies to solve the problems above, the inventors have completed the present invention by finding that, although it was not possible to improve the relaxation resistance only by bluing a bolt steel or only by increasing the Si content to a certain value or more without bluing, it was possible to improve the relaxation resistance significantly by combining an addition of Si in an amount more than a particular value with bluing treatment.

The bolt steel for use in the present invention (high-strength bolt steel) has generally a wire or rod shape; more specifically, it includes both a steel material (wire rod) hot-worked into the wire or rod shape and then heat-treated and a steel material (steel wire) obtained by cold-working the wire rod, for example, mainly by wire drawing; and the steel wire is preferable. The high-strength bolt steel is a kind of pearlite steel, more specifically, a steel having at a total areal rate of proeutectoid ferrite, proeutectoid cementite, bainite and martensite of less than 20% and containing pearlite in balance (i.e., the areal rate of the pearlite structure is more than 80%). Increase in the amounts of proeutectoid ferrite and proeutectoid cementite makes strong wire-drawing difficult because of breakage of wire during wire-drawing, and makes it difficult to adjust the strength of the bolt to a predetermined value or more. Increase in the amounts of proeutectoid cementite and martensite leads to more frequent disconnection during wire-drawing. In addition, bainite, which is smaller in work-hardening amount than pearlite and ineffective in increasing the strength by strong wire-drawing, should be reduced in the amount. In contrast to these structures, the amount of the pearlite structure, which is effective in trapping hydrogen at the interface between cementite and ferrite and in reducing the hydrogen accumulated in grain boundary, should be increased for improvement in delayed fracture resistance- The areal rate of the pearlite structure is recommended to be preferably 90% or more, more preferably 95% or more.

The high-strength bolt steel according to the present invention contains C at 0.5 to 1.0% (mass %, the same shall apply hereinafter), Si at 0.55 to 3%, Mn at 0.2 to 2%, P at 0.03% or less (but not 0%), S at 0.03% or less (but not 0%), and Al at 0.3% or less (but not 0%). Hereinafter, the reason for restricting the content of each component will be described.

C is an economical element effective in increasing the strength of bolt, and increase in C content leads to increase in strength. To achieve a desirable strength of bolt, the C content is raised to 0.5% or more, preferably 0.55% or more, and more preferably 0.60% or more. However, an excessive C content leads to increase in the amount of the proeutectoid cementite precipitated and thus to significant deterioration in toughness and ductility and also in wire-drawing processability. Thus, the C content is 1.0% or less, preferably 0.9% or less, and more preferably 0.85% or less. When the eutectoid carbon content is represented as Ce, the most desirable C content is Ce±0.2% (preferably Ce±0.1% and particularly preferably Ce±0.05%).

Si increases the relaxation resistance of bluing-treated bolt further. It is presumably because Si is solid-solubilized in soft ferrite, the maximum cause of relaxation, and exerts an action to strengthen the solid solution. Thus, the Si content is 0.55% or more, preferably 0.7% or more, more preferably 1.0% or more, and particularly preferably 1.5% or more. Si has an action to accelerate decarburization of steel material during heating, for example during hot rolling or patenting (e.g., lead patenting). Although the operational condition is normally modified to prevent decarburization, it is possible to soften the surface by accelerating decarburization positively and to prevent cracking during bolt forging, even when the Si content is increased. However, an excessive Si content leads to deterioration in the ductility of the core region. Thus, the Si content is 3% or less, preferably 2.5% or less, and more preferably 2.0% or less.

Mn has an action as a deoxidizing agent and also an action to improve the quenching efficiency of wire rod, and thus to increase the uniformity of the crosssectional structure of the wire rod. The Mn content is 0.2% or more, preferably 0.4% or more, and more preferably 0.5% or more. However, an excessive Mn content leads to generation of supercooled structures such as martensite and bainite in the Mn segregation region and hence to deterioration in wire-drawing processability. Thus, the Mn content is 2% or less, preferably 1.5% or less, and more preferably 1.0% or less.

P is an element causing grain boundary segregation and deterioration in delayed fracture resistance. Thus, the P content is reduced to 0.03% or less, preferably 0.02% or less, more preferably 0.015% or less, and particularly preferably 0.010% or less.

S forms MnS in steel, which becomes the stress-concentration point when a stress is applied. Thus, the S content is preferably as small as possible, for improvement in delayed fracture resistance. From the viewpoint above, the S amount is limited to 0.03% or less, preferably 0.02% or less, more preferably 0.015% or less, and particularly preferably 0.010% or less.

Al generates nitride and oxide inclusions, lowering wire-drawing efficiency. Thus, the Al content is 0.3% or less, preferably 0.1% or less, and more preferably 0.05% or less; and, in particular when the wire-drawing efficiency is considered more, it is 0.03% or less (preferably 0.02% or less, in particular 0.010% or less). On the other hand, Al is also effective in improving the delayed fracture resistance by capturing N in steel to form AlN and reducing the size of crystal grain, and thus, Al may be added positively. Thus, the Al content is, for example, 0.01% or more, preferably 0.02% or more, and more preferably 0.03% or more.

The high-strength bolt steel may contain other elements additionally in the range that does not impair the advantageous effects of the present invention, and examples thereof include first supplementary elements (such as Cr and Co), second supplementary elements (such as Ni), third supplementary elements (such as Cu), fourth supplementary elements (such as Mo, V, Nb, Ti, and W), and fifth supplementary elements (such as B); and these supplementary element may be used alone or in combination of two or more as needed. Hereinafter, the supplementary element will be described.

The first supplementary elements, Cr and Co, may be added in the ranges of Cr: 2.5% or less (but not 0%) and Co: 0.5% or less (but not 0%). Cr and Co are effective in preventing precipitation of proeutectoid cementite, and thus, particularly useful as the additives for the high-strength bolt according to the present invention aimed at reducing the content of proeutectoid cementite. Such an action is amplified by increase in the amounts thereof added, and thus, the Cr content is recommended to be 0.05% or more (for example, 0.1% or more and particularly preferably 0.2% or more), or the Co content, 0.01% or more (for example, 0.03% or more and particularly preferably 0.05% or more), to make the action more distinctive. An excessive addition leads to saturation of the action, and is thus uneconomical. Thus, the Cr content is 2.5% or less (preferably 2.0% or less and more preferably 1.2% or less), and the Co content is 0.5% or less (preferably 0.3% or less and more preferably 0.2% or less). Only one or both of Cr and Co may be added.

The second supplementary element Ni may be added in an amount in the range of 1.0% or less (but not 0%). Ni is not effective in improving the strength of bolt, but effective in increasing the toughness of drawn wire rod. Although the effect is amplified when the Ni content is increased, the Ni content is recommended to be preferably 0.05% or more, more preferably 0.1% or more, and particularly preferably 0.15% or more, to make the action more distinctive. However, an excessive Ni content leads to elongation of the period until completion of transformation and thus to expansion of facility and decrease in productivity. Thus, the Ni content is 1.0% or less, preferably 0.5% or less, and more preferably 0.3% or less.

The third supplementary element Cu may be added in an amount in the range of 1.0% or less (but not 0%). Cu is an element effective in improving the strength of bolt by its precipitation-hardening action. The action is amplified by increase of the Cu content, and, to make the action more distinctive, the Cu amount is recommended to be preferably 0.05% or more, more preferably 0.1% or more, and particularly preferably 0.2% or more. However, an excessive Cu content causes embrittlement of grain boundary and thus deterioration in delayed fracture resistance. Thus, the Cu amount is 1.0% or less, preferably 0.5% or less, and more preferably 0.3% or less.

The fourth supplementary elements Mo, V, Nb, Ti, W, and others may be added in a total amount of 0.5% or less (but not 0%). These elements Mo, V, Nb, Ti, and W form fine carbides/nitrides, which are effective in improving delayed fracture resistance. The action is amplified by increase of the total amount of these elements, and the total amount is preferably 0.02% or more and more preferably 0.05% or more. However, an excessive total amount of these elements leads to inhibition of delayed fracture resistance and also to deterioration in toughness. Thus, the total amount of these elements is 0.5% or less, preferably 0.2% or less, and more preferably 0.15% or less. These elements, Mo, V, Nb, Ti, W, and the like, may be added alone or in combination of two or more.

The fifth supplementary element B may be added in an amount in the range of 0.003% or less (but not 0%). B is added for improvement in quenching efficiency. The action is amplified by increase of the B content, and the B content is preferably 0.0005% or more, and more preferably 0.0010% or more, to make the action more distinctive. However, an excessive B content leads to inhibition of toughness. Thus, the B content is 0.003% or less, preferably 0.0025% or less, and more preferably 0.0020% or less.

The elements in balance include Fe and unavoidable impurities..

The bolt steel for use in the present invention preferably has a tensile strength to a degree allowing the bolt after processing such as wire-drawing or bluing to have a certain strength, and specifically, has a tensile strength of approximately 1,000 N/mm$^2$ or more, preferably 1,100 N/mm$^2$ or more, more preferably 1,200 N/mm$^2$ or more, and

particularly preferably 1,300 N/mm$^2$ or more.

The bolt according to the present invention is produced by wire-drawing the bolt steel (wire rod or steel wire), cold-heading it into bolt, and then, bluing the bolt in a temperature range of 100 to 500˚C. Such a bolt has a favorable high tensile strength of 1,200 N/mm$^2$ or more (preferably 1,400 N/mm$^2$ or more, more preferably 1,500 N/mm$^2$ or more, and particularly preferably 1,600 N/mm$^2$ or more) and is also superior in delayed fracture resistance and relaxation resistance.

The wire-drawing is performed, because a steel only rolled or forged does not have the dimensional accuracy needed for high-strength bolt and it is difficult to achieve a predetermined final strength. The strong wire drawing results in improvement in fine dispersion of part of the cementite grains in pearlite structure and thus in improvement in hydrogen-trapping capacity, and increases in cracking resistance due to the alignment of the grains in the wire-drawing direction. The wire-drawing condition is not particularly limited if it is the strong wire-drawing to a degree giving a particular tensile strength, but, for example, it is recommended to process the wire rod to a degree that the reduction of area is approximately 30 to 85% (preferably approximately 50 to 70%).

The bluing treatment is an essential step in the present invention for utilizing the relaxation resistance endowed by Si. That is, the bluing treatment is useful because it prevents plastic deformation by the age hardening with C and N and increases the strength and the proof stress ratio of bolt; and it is also useful in amplifying the action by the Si addition above (reinforcement of solid solution in relaxation-causing ferrite) and in improving the relaxation resistance markedly, because it prevents thermal settling at a temperature of 100 to 200˚C. Because the Si content is increased in the present invention, it is also possible to prevent deterioration in tensile strength and proof stress during bluing, even when the bluing is performed at high temperature. It is thus possible to improve tensile strength and proof stress and additionally to raise relaxation resistance. An excessively lower bluing temperature results in insufficient age hardening and insufficient improvement in the strength and proof stress ratio of bolt, and consequently, in insufficient improvement in relaxation resistance. Thus, the bluing temperature is 100˚C or higher, preferably 200˚C or higher, and more preferably 300˚C or higher. On the other hand, an excessively higher bluing temperature results in deterioration in the strength of bolt by softening. Thus, the bluing temperature is 500˚C or lower, preferably 450˚C or lower, and more preferably 400˚C or lower.

EXAMPLES

Hereinafter, the present invention will be described more specifically with reference to Examples, but it should be understood that the present invention is not restricted by the following Examples, and modifications can be made within the scope of the description above and below, and such modification are also included in the technical scope of the present invention.

Example 1

Test steels (A to M) respectively having the chemical compositions shown in the following Table 1 were hot-rolled into wires having the wire diameters (8.0 to 11.5 mmφ) shown in the following Table 2, and the wires were patented in the conditions shown in the following Table 2 (heating temperature: 940˚C, constant temperature transformation: at 510 to 620˚C for 4 minutes). The test steel M was converted completely into the martensite structure by quenching and tempering for comparison. The structure, degree of decarburization, and tensile strength of the steel wires obtained were determined. In studying the structure, the proeutectoid ferrite, proeutectoid cementite, bainite and martensite or pearlite structure was separated by the following method; and the areal rate of each structure was determined.

[Separation of each structure]

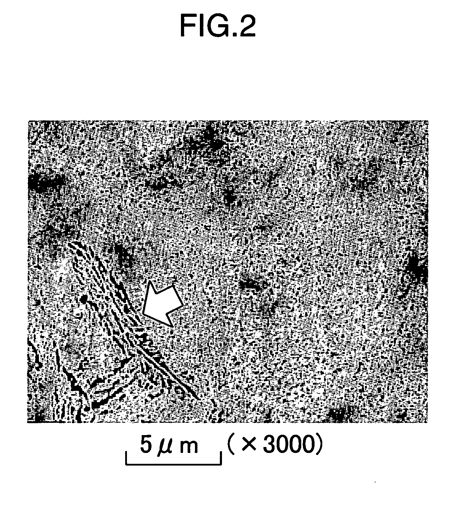

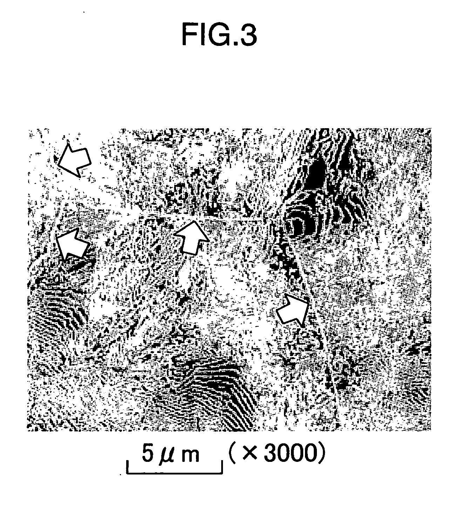

The crosssectional face of a steel wire was embedded, polished and corroded as it is immersed in alcoholic 5% picrate solution for 15 to 30 seconds; and the structure of the D/4 region (D: diameter) was observed under a scanning electron microscope (SEM) JKA-89CORL manufactured by Japan electron Co., Ltd. Photographs of 5 to 10 visual fields were taken at a magnification of 1,000 to 3,000 times, for determining the pearlite structure region, and the areal rate of each structure was determined by using an image-analyzer FRMTOOL-KIT manufactured by Photron Ltd. As for the bainite and proeutectoid cementite structures, which are less easily differentiated from the pearlite structure, the structure shown in Figure 2 (photo replacing drawing) was regarded as the bainite structure, and the structure shown in Figure 3 (photo replacing drawing) as the proeutectoid cementite structure. In general tendency of these structures, proeutectoid ferrite and proeutectoid cementite deposited along the original austenite grain boundary, while martensite deposited in the bulky shape. Results are summarized in Table 2.

Table 1

| STEEL SYMBOL | CHEMICAL COMPOSITION (mass %) ※ | | | | | | | | |
|---|---|---|---|---|---|---|---|---|---|
| | C | Si | Mn | P | S | Al | N | O | OTHERS |
| A | 0.64 | 1.46 | 0.66 | 0.013 | 0.010 | 0.002 | 0.005 | 0.0014 | Cr : 0.68 |
| B | 0.64 | 1.46 | 0.60 | 0.011 | 0.010 | 0.002 | 0.005 | 0.0019 | V: 0.104 |
| C | 0.83 | 0.92 | 0.74 | 0.008 | 0.006 | 0.037 | 0.006 | 0.0008 | |
| D | 0.64 | 2.05 | 0.90 | 0.010 | 0.008 | 0.003 | 0.005 | 0.0013 | Cr : 0.98. Ni : 0.26. V : 0.092 |
| E | 0.60 | 1.94 | 0.93 | 0.012 | 0.005 | 0.033 | 0.005 | 0.0014 | |
| F | 0.62 | 2.54 | 0.51 | 0.015 | 0.012 | 0.034 | 0.005 | 0.0010 | Cr: 0.50, Mc : 0.10, Co : 0.05 |
| G | 0.60 | 2.89 | 0.51 | 0.010 | 0.008 | 0.035 | 0.006 | 0.0011 | Cr: 0.51, B:0.0015 |
| H | 0.82 | 0.55 | 0.78 | 0.009 | 0.007 | 0.034 | 0.005 | 0.0008 | Cr : 0.70 |
| I | 0.65 | 1.50 | 0.65 | 0.015 | 0.014 | 0.035 | 0.005 | 0.0009 | Cu : 0.25 |
| J | 0.85 | 0.25 | 0.77 | 0.010 | 0.006 | 0.048 | 0.004 | 0.0007 | |
| K | 0.82 | 0.26 | 0.71 | 0.015 | 0.009 | 0.041 | 0.005 | 0.0007 | Cr : 0.18 |
| L | 0.77 | 0.45 | 0.72 | 0.012 | 0.012 | 0.039 | 0.005 | 0.0008 | Cr : 0.17 |
| M | 0.34 | 0.19 | 0.70 | 0.016 | 0.009 | 0.033 | 0.003 | 0.0009 | Cr : 0.95, Mo : 0.18 |

※ THE ELEMENTS IN BALANCE ARE FE AND UNAVOIDABLE IMPURITIES.

Table 2

| TEST NO. | STEEL SYMBOL | STEEL WIRE SYMBOL | HOT-ROLLED WIRE DIAMETER (mm) | PATENTING CONSTANT TEMPERATURE (˚C) | STRUCTURE (AREA %) | | | | | TENSILE STRENGTH (N/mm$^2$) |
|---|---|---|---|---|---|---|---|---|---|---|
| | | | | | PROEUTECTOID FERRITE | PROEUTECTOID CEMENTITE | BAINITE | MARTENSITE | PEARLITE | |
| 1 | A | WA1 | 10.5 | 600 | 10 | 0 | 0 | 0 | 90 | 1360 |
| 2 | | WA2 | 8.0 | 600 | 3 | 0 | 0 | 0 | 97 | 1358 |
| 3 | | WA3 | 8.0 | 620 | 5 | 0 | 0 | 0 | 95 | 1287 |
| 4 | B | WB1 | 10.5 | 600 | 10 | 0 | 0 | 0 | 90 | 1370 |
| 5 | | WB2 | 8.0 | 600 | 5 | 0 | 0 | 0 | 95 | 1346 |
| 6 | | WB3 | 8.0 | 620 | 7 | 0 | 0 | 0 | 93 | 1305 |
| 7 | C | WC | 10.5 | 560 | 5 | 5 | 0 | 0 | 90 | 1314 |
| 8 | D | WD | 10.5 | 600 | 10 | 0 | 0 | 0 | 90 | 1450 |
| 9 | E | WE | 11.5 | 560 | 15 | 0 | 0 | 0 | 85 | 1220 |
| 10 | F | WF | 10.5 | 600 | 10 | 0 | 0 | 0 | 90 | 1381 |
| 11 | G | WG | 10.5 | 600 | 15 | 0 | 0 | 0 | 85 | 1398 |
| 12 | H | WH | 10.5 | 560 | 5 | 5 | 0 | 0 | 90 | 1305 |
| 13 | I | WI | 8.0 | 600 | 5 | 0 | 0 | 0 | 95 | 1399 |
| 14 | J | WJ | 8.0 | 510 | 5 | 0 | 0 | 0 | 95 | 1268 |
| 15 | K | WK | 8.0 | 525 | 5 | 0 | 0 | 0 | 95 | 1305 |
| 16 | L | WL | 8.0 | 535 | 10 | 0 | 0 | 0 | 90 | 1310 |
| 17 | M | WM | 11.0 | QUENCHING(880˚C × 30min.→0Q), TEMPERING(460˚C × 90min.→WC), 100% MARTENSITE STRUCTURE | | | | | | | |
| OQ: OIL QUENCHING, WC: WATER COOLING | | | | | | | | | | |

EP 1 728 883 A1

The respective steel wires were wire-drawn tightly to the wire diameters (7.06 mmφ or 5.25 mm φ) shown in the following Table 3 (reduction of area: 55 to 62%); the wire-drawing efficiency was evaluated; and the tensile strength of the strongly drawn wire rods obtained and the delayed fracture resistance were determined. The criteria for evaluation of wire-drawing efficiency are as follows: The wire-drawing efficiency and the delayed fracture resistance were evaluated by the following methods:

[Wire-drawing efficiency]

Favorable: Drawn to a predetermined wire diameter without problem, and no abnormal breakage observed in the tensile test after wire-drawing.

Unfavorable: Abnormal breakage such as cuppy breakage and longitudinal crack observed in the tensile test during or after wire-drawing

[Delayed fracture resistance]

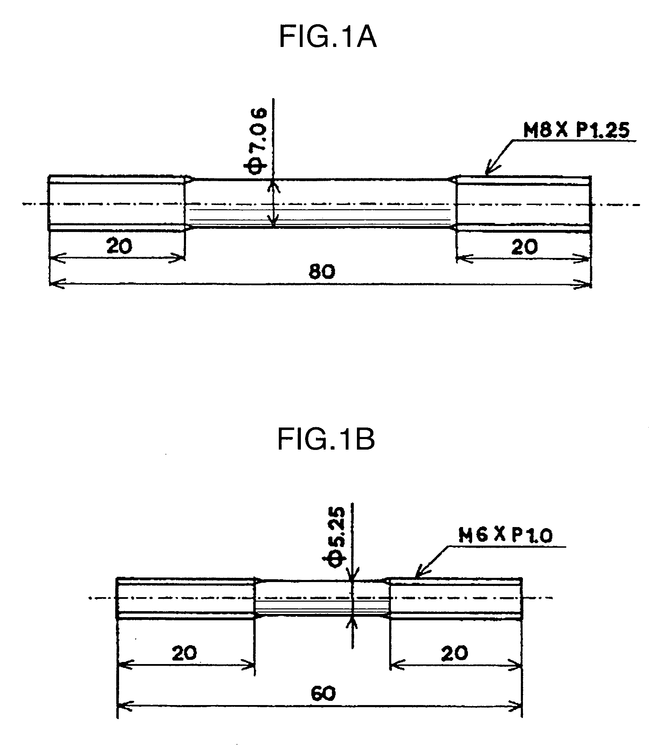

From the strongly drawn wire rods, stud bolts of M8×P1.25 shown in Figure 1 [Figure 1A, from steel wire having a wire diameter of 7.06 mm φ] and stud bolts of M6×P1.0 [Figure 1B, from the steel wire having a wire diameter of 5.25 mm φ] were prepared, and the delayed fracture test was performed. In the delayed fracture test, a bolt was immersed in acid (15% HClx30 minute), washed with water, dried, and then, left in air under stress (loaded stress: 90% of tensile strength); and presence or absence of fracture was evaluated after 100 hours (○: no fracture, × : fracture).

[Table 3]

| TEST NO. | STEEL SYMBOL | STEEL WIRE SYMBOL | STRONG WIRE-DRAWING STEP | | | DRAWN WIRE ROD TENSILE STRENGTH (N/mm$^2$) | DELAYED FRACTURE RESISTANCE |
|---|---|---|---|---|---|---|---|
| | | | REDUCTION OF AREA (%) | POST-WIRE-DRAWING WIRE DIAMETER (mm) | WIRE-DRAWING EFFICIENCY | | |
| 1 | A | WA1 | 55 | 7.06 | FAVORABLE | 1609 | O |
| 2 | A | WA2 | 57 | 5.25 | FAVORABLE | 1615 | O |
| 3 | | WA3 | 57 | 5.25 | FAVORABLE | 1561 | O |
| 4 | | WB1 | 55 | 7.06 | FAVORABLE | 1619 | O |
| 5 | B | WB2 | 57 | 5.25 | FAVORABLE | 1623 | O |
| 6 | | WB3 | 57 | 5.25 | FAVORABLE | 1584 | O |
| 7 | C | WC | 55 | 7.06 | FAVORABLE | 1637 | O |
| 8 | D | WD | 55 | 7.06 | FAVORABLE | 1699 | O |
| 9 | E | WE | 62 | 7.06 | FAVORABLE | 1507 | O |
| 10 | F | WF | 55 | 7.06 | FAVORABLE | 1622 | O |
| 11 | G | WG | 55 | 7.06 | FAVORABLE | 1632 | O |
| 12 | H | WH | 55 | 7.06 | FAVORABLE | 1624 | O |
| 13 | I | WI | 57 | 5.25 | FAVORABLE | 1658 | O |
| 14 | J | WJ | 57 | 5.25 | FAVORABLE | 1640 | O |
| 15 | K | WK | 57 | 5.25 | FAVORABLE | 1631 | O |
| 16 | L | WL | 57 | 5.25 | FAVORABLE | 1628 | O |
| 17 | M | WM | 59 | 7.06 | - | 1318 | × |

Each of the strongly drawn wire rods thus obtained was subjected to a bluing treatment at a temperature of 200 to 400˚C. The tensile strength and the 0.2% proof stress of the bluing and non-bluing treated wire rods were determined. Separately, a relaxation test was performed according to JIS G3538. The temperature of the relaxation test was 150˚C. In the present test, a test piece was held at a suitable distance, and a load (applied load) W1 equivalent to 80% of the load of the 0.2% proof stress was applied; the applied load was gradually lowered, while a movable weight (weight for adjusting elongation of the test piece) was adjusted to make the grasp length of the test piece (GL: 300 mm) constant; the load W2 after 10 hours was determined; and the relaxation value was calculated according to the following Formula:

$$\text{Relaxation value (\%)} = [(W1 \cdot W2)/W1] \times 100$$

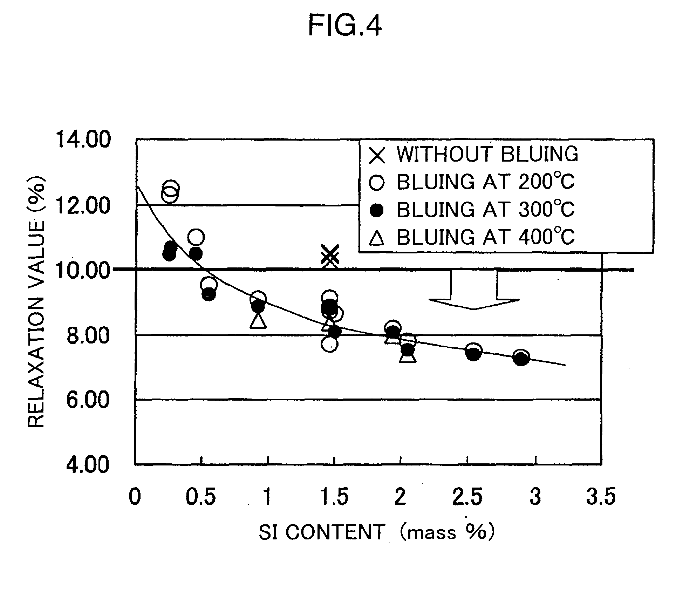

In addition, each stud bolt prepared above after bluing was also evaluated in a delayed fracture test similar to that above. Results are summarized in Table 4 and Figure 4.

[Table 4]

| TEST NO | STEEL SYMBOL | STEEL WIRE SYMBOL | BLUING TEMPERATURE (°C) | TENSILE STRENGTH (N/mm$^2$) | 0.2% PROFF STRESS (N/mm$^2$) | APPLIED LOAD (N/mm$^2$) | RELAXATION VALUE (%) | DELAYED FRACTURE RESISTANCE |
|---|---|---|---|---|---|---|---|---|
| 2 | A | WA2 | - | 1615 | 1436 | 1149 | 10.55 | - |
| 2A | | | 200 | 1713 | 1642 | 1314 | 9.14 | O |
| 2B | | | 300 | 1700 | 1638 | 1310 | 8.87 | O |
| 2C | | | 400 | 1681 | 1628 | 1302 | 8.39 | O |
| 3 | | WA3 | - | 1561 | 1363 | 1090 | 10.48 | - |
| 3A | | | 200 | 1671 | 1595 | 1276 | 7.72 | O |
| 5 | B | WB2 | - | 1623 | 1453 | 1162 | 10.50 | - |
| 5A | | | 200 | 1746 | 1709 | 1367 | 8.76 | O |
| 6 | | WB3 | - | 1584 | 1389 | 1111 | 10.30 | - |
| 6A | | | 200 | 1690 | 1617 | 1294 | 8.87 | O |
| 7A | C | WC | 200 | 1754 | 1705 | 1364 | 9.11 | O |
| 7B | | | 300 | 1734 | 1643 | 1314 | 8.89 | O |
| 7C | | | 400 | 1728 | 1624 | 1299 | 8.47 | O |
| 8A | D | WD | 200 | 1821 | 1765 | 1412 | 7.81 | O |
| 8B | | | 300 | 1807 | 1715 | 1372 | 7.55 | O |
| 8C | | | 400 | 1787 | 1699 | 1359 | 7.41 | O |
| 9A | E | WE | 200 | 1628 | 1594 | 1275 | 8.21 1 | O |
| 9B | | | 300 | 1611 | 1542 | 1234 | 8.10 | O |
| 9C | | | 400 | 1608 | 1538 | 1230 | 7.99 | O |
| 10A | F | WF | 200 | 1741 | 1701 | 1361 | 7.51 | O |
| 10B | | | 300 | 1738 | 1698 | 1358 | 7.40 | O |
| 11A | G | WG | 200 | 1758 | 1724 | 1379 | 7.31 | O |
| 11B | | | 300 | 1751 | 1715 | 1372 | 7.26 | O |

(continued)

| TEST NO | STEEL SYMBOL | STEEL WIRE SYMBOL | BLUING TEMPERATURE (˚C) | TENSILE STRENGTH (N/mm$^2$) | 0.2% PROFF STRESS (N/mm$^2$) | APPLIED LOAD (N/mm$^2$) | RELAXATION VALUE (%) | DELAYED FRACTURE RESISTANCE |
|---|---|---|---|---|---|---|---|---|
| 12A | H | WH | 200 | 1711 | 1668 | 1334 | 9.55 | O |
| 12B | | | 300 | 1698 | 1625 | 1300 | 9.26 | O |
| 13A | I | WI | 200 | 1751 | 1711 | 1369 | 8.67 | O |
| 13B | | | 300 | 1742 | 1708 | 1366 | 8.11 | O |
| 14A | J | WJ | 200 | 1758 | 1680 | 1344 | 12.31 | O |
| 14B | | | 300 | 1750 | 1658 | 1326 | 10.49 | O |
| 15A | K | WK | 200 | 1740 | 1660 | 1328 | 12.52 | O |
| 15B | | | 300 | 1727 | 1551 | 1241 | 10.70 | O |
| 16A | L | WL | 200 | 1745 | 1671 | 1337 | 11.01 | O |
| 16B | | | 300 | 1734 | 1572 | 1258 | 10.51 | O |

The quenched and tempered steel (martensite steel) M was insufficient in delayed fracture resistance (see Table 3).

The pearlite steels J to L were improved in delayed fracture resistance (see Tables 3 and 4). However, these steels having a Si content of less than 0.55% were limited in the relaxation resistance (see Table 4).

In contrast, both bluing and unbluing-treated steels A to I, which are all pearlite steels, were superior in delayed fracture resistance (see Tables 3 and 4). In addition, the bluing-treated steels having a Si content of 0.55% or more were more improved in relaxation resistance (white and black circles in Figure 4). As apparent from Figure 4, it is not possible to improve the relaxation resistance without bluing treatment even if the Si content is 0.55% or more (cross in Figure 4), but possible to improve the relaxation resistance by combination of increase in the Si content with bluing treatment.

In summarizing the invention above, the high-strength bolt according to the invention is characterized by having a relaxation resistance significantly increased by addition of Si in an amount of more than a particular value.

The high-strength bolt according to the invention has a tensile strength of 1,200 N/mm$^2$ or more that is superior in delayed fracture resistance and relaxation resistance, characterized by being prepared by: wire-drawing a bolt steel containing the following elements: C: 0.5 to 1.0% (mass %, the same shall apply hereinafter), Si: 0.55 to 3%, Mn: 0.2 to 2%, P: 0.03% or less (but not 0%), S: 0.03% or less (but not 0%), and Al: 0.3% or less (but not 0%), having at a total areal rate of proeutectoid ferrite, proeutectoid cementite, bainite and martensite of less than 20%, and containing pearlite in balance; cold-heading the wire into a bolt shape; and then bluing the bolt in a temperature range of 100 to 500°C.

The high-strength bolt according to the present invention may contain additionally Cr at 2.5% or less (but not 0%), Co at 0.5% or less (but not 0%), Ni at 1.0% or less (but not 0%), Cu at 1.0% or less (but not 0%), B at 0.003% or less (but not 0%), and others, and may contain Mo, V, Nb, Ti, W, and others in a total amount in the range of 0.5% or less (but not 0%).

The high-strength bolt according to the present invention preferably contains additionally at least one element selected from Cr at 2.5% or less (but not 0%) and Co at 0.5% or less (but not 0%). It more preferably contains additionally Ni at 1.0% or less (but not 0%). It more preferably contains additionally at least one element selected from Mo, V, Nb, Ti, and W in a total amount in the range of 0.5% or less (but not 0%). It more preferably contains B at 0.003% or less (but not 0%).

The high-strength bolt according to the present invention more preferably contains additionally Ni at 1.0% or less (but not 0%).

The high-strength bolt according to the present invention more preferably contains Cu at 1.0% or less (but not 0%).

The high-strength bolt according to the present invention more preferably contains additionally at least one element selected fro Mo, V, Nb, Ti, and W in a total amount in the range of 0.5% or less (but not 0%).

The high-strength bolt according to the present invention preferably contains B at 0.003% or less (but not 0%).

The balance of the high-strength bolt according to the present invention may be Fe and inevitable impurities.

The present invention overcomes various problems associated with bolts prepared from pearlite steel materials superior in delayed fracture resistance. That is, it is possible to improve the relaxation resistance of bolt drastically by adding Si in a certain amount or more.

This application is based on Japanese Patent Application No. 2004-057379 filed on March 2, 2004, the contents of which are hereby incorporated by reference.

[Industrial Applicability]

By the present invention in the configuration above, it was possible to produce a high-strength bolt having a tensile strength of 1,200 N/mm$^2$ or more that is superior in delayed fracture resistance and relaxation resistance, by adding Si in a certain amount or more.

**Claims**

1. A high-strength bolt having a tensile strength of 1,200 N/mm$^2$ or more that is superior in delayed fracture resistance and relaxation resistance, wherein the bolt is prepared by: wire-drawing a bolt steel containing the following elements: C: 0.5 to 1.0% (mass %, the same shall apply hereinafter), Si: 0.55 to 3%, Mn: 0.2 to 2%, P: 0.03% or less (but not 0%), S: 0.03% or less (but not 0%), and Al: 0.3% or less (but not 0%), and containing proeutectoid ferrite, proeutectoid cementite, bainite and martensite at a total areal rate of less than 20% and pearlite in balance; cold-heading the wire into a bolt shape; and then bluing the bolt in a temperature range of 100 to 500°C.

2. The high-strength bolt according to Claim 1, wherein the bolt steel further comprises at least one of the following elements: Cr: 2.5% or less (but not 0%) and Co: 0.5% or less (but not 0%).

3. The high-strength bolt according to Claim 1; wherein the bolt steel further comprises Ni at 1.0% or less (but not 0%).

4. The high-strength bolt according to Claim 1, wherein the bolt steel further comprises Cu at 1.0% or less (but not 0%).

5. The high-strength bolt according to Claim 1, wherein the bolt steel further comprises at least one element selected from Mo, V, Nb, Ti, and W in a total amount of 0.5% or less (but not 0%).

6. The high-strength bolt according to Claim 1, wherein the bolt steel further comprises B at 0.003% or less (but not 0%).

7. The high-strength bolt according to Claim 2, wherein the bolt steel further comprises Ni at 1.0% or less (but not 0%).

8. The high-strength bolt according to Claim 2, wherein the bolt steel further comprises at least one element selected from Mo, V, Nb, Ti, and W in a total amount of 0.5% or less (but not 0%).

9. The high-strength bolt according to Claim 2, wherein the bolt steel further comprises B at 0.003% or less (but not 0%).

10. The high-strength bolt according to Claim 7, wherein the bolt steel further comprises at least one element selected from Mo, V, Nb, Ti, and W in a total amount of 0.5% or less (but not 0%).

11. The high-strength bolt according to Claim 1, wherein the elements in balance are Fe and inevitable impurities.

## FIG.1A

Φ7.06

M8 X P1.25

20

20

80

## FIG.1B

Φ5.25

M6 X P1.0

20

20

60

# FIG.2

5 μm (×3000)

# FIG.3

5 μm (×3000)

# FIG.4

**INTERNATIONAL SEARCH REPORT**

| International application No. |
| --- |
| PCT/JP2005/003393 |

A.   CLASSIFICATION OF SUBJECT MATTER
   Int.Cl$^7$  C22C38/00, 38/06, 38/58, F16B35/00//C21D9/00

According to International Patent Classification (IPC) or to both national classification and IPC

B.   FIELDS SEARCHED

Minimum documentation searched (classification system followed by classification symbols)
   Int.Cl$^7$  C22C38/00, 38/06, 38/58, F16B35/00//C21D9/00

Documentation searched other than minimum documentation to the extent that such documents are included in the fields searched
   Jitsuyo Shinan Koho          1922-1996   Jitsuyo Shinan Toroku Koho     1996-2005
   Kokai Jitsuyo Shinan Koho    1971-2005   Toroku Jitsuyo Shinan Koho     1994-2005

Electronic data base consulted during the international search (name of data base and, where practicable, search terms used)
   WPI

C.   DOCUMENTS CONSIDERED TO BE RELEVANT

| Category* | Citation of document, with indication, where appropriate, of the relevant passages | Relevant to claim No. |
| --- | --- | --- |
| Y | JP 2000-337333 A  (Kobe Steel, Ltd.),<br>05 December, 2000 (05.12.00),<br>Full text<br>(Family: none) | 1-11 |
| Y | JP 11-315349 A  (Kobe Steel, Ltd.),<br>16 November, 1999 (16.11.99),<br>Full text<br>(Family: none) | 1-11 |
| Y | JP 3-44127 B2  (Netsuren Co., Ltd.),<br>05 July, 1991 (05.07.91),<br>Full text<br>(Family: none) | 1-11 |

| ☒   Further documents are listed in the continuation of Box C. | ☐   See patent family annex. |
| --- | --- |

\*     Special categories of cited documents:
"A"   document defining the general state of the art which is not considered
      to be of particular relevance
"E"   earlier application or patent but published on or after the international
      filing date
"L"   document which may throw doubts on priority claim(s) or which is
      cited to establish the publication date of another citation or other
      special reason (as specified)
"O"   document referring to an oral disclosure, use, exhibition or other means
"P"   document published prior to the international filing date but later than
      the priority date claimed

"T"   later document published after the international filing date or priority
      date and not in conflict with the application but cited to understand
      the principle or theory underlying the invention
"X"   document of particular relevance; the claimed invention cannot be
      considered novel or cannot be considered to involve an inventive
      step when the document is taken alone
"Y"   document of particular relevance; the claimed invention cannot be
      considered to involve an inventive step when the document is
      combined with one or more other such documents, such combination
      being obvious to a person skilled in the art
"&"   document member of the same patent family

| Date of the actual completion of the international search<br>   27 May, 2005 (27.05.05) | Date of mailing of the international search report<br>   14 June, 2005 (14.06.05) |
| --- | --- |
| Name and mailing address of the ISA/<br>   Japanese Patent Office | Authorized officer |
| Facsimile No. | Telephone No. |

Form PCT/ISA/210 (second sheet) (January 2004)

**EP 1 728 883 A1**

**INTERNATIONAL SEARCH REPORT**

International application No.

PCT/JP2005/003393

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-348618 A  (Honda Motor Co., Ltd.),<br>18 December, 2001 (18.12.01),<br>Full text<br>& EP 12739670 A1        & US 6605166 B2 | 1-11 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60114551 A
- JP 2267243 A
- JP 3243745 A
- JP 2000337332 A
- JP 2001348618 A
- JP 2004057379 A